Europäisches Patentamt

European Patent Office

Office européen des brevets

(19)

(11) Veröffentlichungsnummer : **0 063 733**
**B1**

(12) # EUROPÄISCHE PATENTSCHRIFT

(45) Veröffentlichungstag der Patentschrift :
09.10.85

(21) Anmeldenummer : 82103070.7

(22) Anmeldetag : 09.04.82

(51) Int. Cl.⁴ : **H 02 G   3/04**

(54) **Feuerschutz-Ummantelung.**

(30) Priorität : 22.04.81 DE 8111976 U
11.03.82 DE 3208890

(43) Veröffentlichungstag der Anmeldung :
03.11.82 Patentblatt 82/44

(45) Bekanntmachung des Hinweises auf die Patenterteilung : 09.10.85 Patentblatt 85/41

(84) Benannte Vertragsstaaten :
AT BE CH DE FR GB IT LI LU NL SE

(56) Entgegenhaltungen :
DE-A- 1 559 332
DE-A- 3 022 558
FR-A- 2 326 947
GB-A-   557 609
US-A- 3 570 208
US-A- 4 276 332

(73) Patentinhaber : PCT PYROCHEMTEK AG
Rütlistrasse 50
CH-4051 Basel (CH)

ROCKWOOL AKTIEBOLAGET
Fack 615
S-541 86 Skövde (SE)

Chemische Fabrik Grünau GmbH
Robert-Hansen-Strasse 1
D-7918 Illertissen (DE)

(72) Erfinder : Eiermann, Horst Walter
Rütlistrasse 50
CH-4051 Basel (CH)

(74) Vertreter : Patentanwälte Ruff und Beier
Neckarstrasse 50
D-7000 Stuttgart 1 (DE)

**Beschreibung**

Die Erfindung betrifft eine Feuerschutz-Ummantelung zum Schutz hitzeempfindlicher, elektrischer Kabel in petrochemischen Anlagen, mit starren Bauelementen auf Mineralfaserbasis.

Die meisten elektrischen Kabel sind heute zu Isolationszwecken mit Kunststoff ummantelt. Bei den zur Kabelummantelung verwendeten Kunststofen handelt es sich in aller Regel um hitzeempfindliche, leicht brennbare Kunststoffe. Es wurden deshalb schon verschiedene Vorschläge zum Kabel-Brandschutz gemacht. So wurde beispielsweise vorgeschlagen, auf die Kabel eine selbstlöschende Brandschutzmasse, wie sie beispielsweise aus der DE-PS 20 39 969 bekannt ist, aufzutragen. Dieses Verfahren ist relativ aufwendig, insbesondere in den Fällen, in denen mehrere nebeneinander verlaufende Kabel vor Brandgefahr zu schützen sind.

Es ist deshalb schon eine Kabeltrassen-Ummantelung mit einem kanalartig ausgebildeten Schutzmantel vorgeschlagen worden, der aus zwei Lagen Stahlblech besteht, deren Zwischenraum mit Mineralwolle ausgefüllt ist. Um Korrosionen zu vermeiden, sind zum Bau derartiger Schutzmäntel rostfreie oder zumindest verzinkte Bleche zu verwenden, was mit erheblichen Kosten verbunden ist. Metallene Schutzmäntel benötigen darüberhinaus wegen ihres Eigengewichtes eigene Halterungsvorrichtungen, die relativ aufwendig und nicht immer montierbar sind.

Aus der FR-A-2 326 947 sind verschiedene Feuerschutz-Ummantelungen für hitzeempfindliche Kabel bekannt, die jeweils aus plattenförmigen Bauelementen aus Asbest-Zement bestehen, zu deren Befestigung Schrauben vorgesehen sind. Diese Feuerschutz-Ummantelungen haben mehrere durch ihren Aufbau und das Material ihrer Bauelemente bedingte Nachteile. Zu diesen Nachteilen zählt zunächst, daß sie relativ aufwendig in ihrem Aufbau sind, dann aber auch, daß sie wegen der unvermeidbar zahlreichen Fugen zwischen den einzelnen Bauelementen nur schwer abzudichten sind. Nicht zuletzt zählt zu diesen Nachteilen aber auch, daß ihre plattenförmigen Bauelemente relativ dick und damit auch schwer ausgebildet sein müssen, wenn sie den geforderten Schutz gewährleisten sollen, mit der Folge, daß sie gesonderte Haltekonstruktionen erfordern.

Aus der DE-A-3 022 558, der GB-A-567 609 und der US-A-3 570 208 sind Feuerschutz-Ummantelungen für Doppel-T-Träger bekannt, die sich schon deshalb nicht für den Schutz elektrischer Kabel in petrochemischen Anlagen eignen, weil sie bleibende Verschalungen darstellen, während für den Schutz elektrischer Kabel Ummantelungen erforderlich sind, die jederzeit einen Zugang zu den Kabeln gestatten. Außerdem sollten elektrische Kabel möglichst so ummantelt werden, daß sie von Luft umgeben sind, damit die beim Stromfluß entstehende Wärme abfließen kann. Diese Voraussetzung ist bei einigen der aus den vorgenannten Druckschriften bekannten Feuerschutz-Ummantelungen nicht gegeben.

Der Erfindung liegt die Aufgabe zugrunde, eine Feuerschutz-Ummantelung zum Schutz hitzeempfindlicher Kabel in petrochemischen Anlagen mit starren Bauelementen auf Mineralfaserbasis zu schaffen, die billiger in ihrer Herstellung und einfacher und problemloser in ihrer Montage ist und dennoch ausreichenden Schutz bietet.

Diese Aufgabe wird erfindungsgemäß durch eine Feuerschutz-Ummantelung gelöst, bei der die Bauelemente aus Mineralwolle gefertigt sind, wenigstens einige Bauelemente in wenigstens einer Richtung bogenförmig gewölbt oder abgewinkelt ausgebildet sind und die wenigstens an der Außenseite eine Feuerschutzbeschichtung aufweist.

Unter Mineralwolle ist insbesondere solche mit hohem Erweichungspunkt, vorzugsweise Steinwolle, Schlackenwolle und/oder keramische Wolle zu verstehen. Als Feuerschutzbeschichtung läßt sich mit Vorteil eine schwer entflammbare oder nicht brennbare Feuerschutzmasse, wie sie beispielsweise aus der DE-PS 20 39 969 bekannt ist, verwenden. Eine solche Feuerschutz-Ummantelung läßt sich, da sie aus selbsttragenden Bauelementen besteht, die kein gesondertes Traggerippe erfordern, den auf der Baustelle herrschenden Gegebenheiten anpassen. Obwohl weder eine Mineralwolle für sich alleine den notwendigen Schutz bringt noch eine Feuerschutzbeschichtung, hat sich überraschenderweise gezeigt, daß zwischen beiden eine Wechselwirkung besteht, durch die erst der Schutz gegen hohe Temperaturen erzielt wird und zwar selbst dann noch, wenn die Mineralwolle und/oder die Feuerschutzschicht noch einen geringen Anteil an organischen Bindemitteln enthält, die sich im Brandfall zersetzen. Da es sich bei der Temperaturerhöhung im Brandfalle um einen dynamischen Prozeß handelt, ist es nicht unbedingt notwendig, daß die erfindungsgemäße Ummantelung die Höchsttemperatur aushält, die im Bereich von 1 000 °C liegen kann. Vielmehr geht es darum, das Eindringen der Wärme so stark zu verzögern, daß es innerhalb der erforderlichen Zeit das Innere der Ummantelung, z. B. elektrische Leitungen, funktionsfähig bleibt.

Die Mineralwolle wird im Brandfalle von der Feuerschutzschicht geschützt. Vor allem gleicht die Feuerschutzschicht durch ihre relativ große Wärmeleitfähigkeit örtliche Wärmeunterschiede aus, ebenso etwaige Inhomogenitäten der Mineralwollplatten. Darüberhinaus wird die Konvektion durch die Mineralwolle wegen der sperrenden Feuerschutzschicht verhindert. Andererseits hat sich überraschenderweise gezeigt, daß die Mineralwolle in der Lage ist, der Feuerschutzschicht als ausreichend stabiles Traggerüst zu dienen, wenn sich die Bindemittel der Feuerschutzschicht zersetzen, so daß deren mechanische Stabilität nachläßt. Im einzelnen ist die Wechselwirkung noch nicht erforscht. Versuche unter entsprechend harten Bedingungen zeigen jedoch die gegenseitige Unterstützung.

Eine solche Feuerschutz-Ummantelung macht es ohne großen technischen Aufwand möglich, daß die in ihrem Inneren verlaufenden Kabel ihre Funktionsfähigkeit zumindest so lange behalten, bis die zur Betätigung von Sicherheitseinrichtungen, beispielsweise Sicherheitsventilen, erforderlichen Signale durchgegeben sind.

Daß unter den Mineralwolle-Bauelementen der erfindungsgemäßen Feuerschutz-Ummantelung wenigstens einige sind, die in wenigstens einer Richtung bogenförmig gewölbt oder abgewinkelt ausgebildet sind, hat zur Folge, daß Dichtungsprobleme, wie sie bei winkelig zueinander verlaufenden plattenförmigen Bauelementen auftreten können, weitgehend vermieden werden. So kann eine Feuerschutz-Ummantelung nach der Erfindung beispielsweise aus vier im Querschnitt im wesentlichen L-profilierten oder aus zwei im Querschnitt im wesentlichen U-profilierten Mineralwolle-Bauelementen bestehen, die einen vor Hitzeeinwirkungen zu schützenden Gegenstand, beispielsweise ein Kabel, ein Versorgungsrohr oder einen Träger oder einen Raum umschließen, in dem vor Hitzeeinwirkungen zu schützende Leitungen verlegt sind.

Die Mineralwolle-Bauelemente der erfindungsgemäßen Feuerschutz-Ummantelung sind vorzugsweise verpreßte Formteile, deren Verpressung vorzugsweise vor dem endgültigen Abbinden des Bindemittels erfolgt ist. Die Mineralwolle-Bauelemente sind vorzugsweise dabei im Verbindungsbereich verdichtet, vorzugsweise unter Ausbildung eines Stufenprofils. Letzteres gilt insbesondere für die in Längsrichtung verlaufenden Verbindungsbereiche.

Die Mineralwolle-Bauelemente der erfindungsgemäßen Feuerschutz-Ummantelung sind vorzugsweise undurchlässig, d. h. flüssigkeits- und insbesondere im wesentlichen gasdicht. Hierzu weisen sie vorzugsweise eine eingelagerte Metallfolie auf, die sich vorzugsweise im wesentlichen über die gesamte Bauelemente-Fläche erstreckt.

Bei einer bevorzugten Ausführungsform der erfindungsgemäßen Feuerschutz-Ummantelung weisen die Mineralwolle-Bauelemente zumindest entlang der Längskanten verlaufende, flanschartig ausgebildete Ränder auf, die nach außen abgebogen sind. Die Mineralwolle-Bauelemente der erfindungsgemäßen Feuerschutz-Ummantelung können auch jeweils aus in Draufsicht im wesentlichen rechteckigen Platten bestehen, deren sämtliche Ränder flanschartig ausgebildet und nach außen abgebogen sind, wobei die Längsränder vorzugsweise jeweils um 45° abgebogen sind, so daß sich aus den einzelnen Elementen ein im Querschnitt rechteckiger oder quadratischer Kanalmantel zusammensetzen läßt, bei dem die flanschartig ausgebildeten Ränder der Elemente großflächig aneinander anliegen, was eine gegenseitige Abdichtung erleichtert. Die Ränder, die zur Kanalverlängerung mit dem entsprechenden Rand eines weiteren Bauelementes verbindbar sind, können um 90° abgewinkelt sein.

Bei der erfindungsgemäßen Feuerschutz-Ummantelung können Winkel- und/oder Eckstücke vorgesehen sein, die die der Ummantelungskanten bzw. -ecken benachbarten Ummantelungsbereiche bedecken, vorzugsweise in einer Breite, die mindestens der doppelten Ummantelungs-Wandstärke entspricht, so daß hier eine gute Abdichtung der Eckbereiche gewährleistet ist.

Zumindest einige der Bauelemente können zur Herstellung gedeckter Kanäle tablettartig und/oder rinnenförmig ausgebildet sein.

Die Mineralwolle-Bauelemente der erfindungsgemäßen Ummantelung können, wie bereits erwähnt, eine eingelagerte Metallfolie aufweisen. Sie können jedoch auch statt dessen oder zusätzlich eine Metallnetz-Verstärkung aufweisen, die vorzugsweise in der Wandungsmitte oder in der inneren Wandungshälfte angeordnet ist. Einer solchen Metallnetz-Verstärkung kommt eine doppelte Aufgabe zu. Zum einen dient sie der Stabilisierung der Ummantelung und zum anderen erhöht sie, da sie die Wärme seitlich verteilt, die Isolationswirkung der Ummantelung.

Die Mineralwolle-Bauelemente können Ausnehmungen, insbesondere Einprägungen zur Lagerung und Befestigung von entsprechend ausgebildeten Befestigungs- und Stützelementen aufweisen, worauf in der nachfolgenden Beschreibung bevorzugter Ausführungsformen noch gesondert hingewiesen werden wird.

Die einzelnen Mineralwolle-Bauelemente sind vorzugsweise unter Anpreßdruck miteinander verbunden. Hierzu sind vorzugsweise Scheiben oder Klammern vorgesehen, die beiderseits von miteinander verbundenen Mineralwolle-Bauelementen angeordnet und gegen diese durch Befestigungselemente wie Schrauben und Muttern gedrückt sind. Es können auch Platten oder Schienen vorgesehen sein, die sich vorzugsweise über den gesamten Verbindungsbereich erstrecken und den Anpreßdruck miteinander verbundener Mineralwolle-Bauelemente gleichmäßig verteilen. Die Verbindungsbereiche können dabei in verschiedenen Ebenen liegen und labyrinthartig ausgebildet sein.

Die vorerwähnte Metallfolie erstreckt sich vorzugsweise über den gesamten Abdeckbereich des zugehörigen Bauelementes und ist vorzugsweise vor dem Abbinden des Bindemittels in das Bauelement eingelagert. Die Metallfolie reicht vorzugsweise nicht bis in die Ränder der Mineralwolle-Bauelemente, so daß deren Anlageflächen, zumindest an der Oberfläche liegende Ränder und Kanten frei von Metallfolie sind.

Die erfindungsgemäße Feuerschutz-Ummantelung kann einlagig oder auch mehrlagig ausgebildet sein. Dies gilt insbesondere für den unteren Ummantelungsbereich. Die mehrlagige Ausbildung ist in mehrererlei Hinsicht von Vorteil. Zum einen hat sie zur Folge, daß die Ummantelung aus dünnerem und damit leichter verformbaren Einzelelementen zusammengesetzt werden kann. Zum anderen schafft die mehrlagige Ausbildung die Möglichkeit, zwischen den einzelnen Mineralwolle-Bauelementen Zwischenlagen vorzusehen. Und schließlich können die Abdichtungsprobleme bei einer mehrlagigen Ausbildung durch gegenseitiges Versetzen der jeweiligen Verbindungsbereiche benachbarter Bauelemente sehr wesentlich verringert werden.

Die Mineralwolle der Bauelemente hat vorzugsweise ein Raumgewicht, das zwischen 100 und 500, vorzugsweise 150 und 250 kg/m$^3$ liegt.

Die einzelnen Lagen können zumindest in den Eck- und Kantenbereichen von identisch geformten Mineralwolle-Bauelementen gebildet sein. Die innere Lage weist vorzugsweise eine höhere Dichte als die äußere Lage auf, so daß auch dann noch die Funktionsfähigkeit der Ummantelung gewährleistet ist, wenn deren äußere Lage unter starker Hitzeeinwirkung steht.

Die Mineralwolle kann bei Temperaturen um 900 °C zum Sintern neigen. Selbst bei so hohen Temperaturen kann das Eindringen von Wärme ausreichend lang verhindert werden, wenn die äußere Lage hinsichtlich ihrer Dichte auf optimale Wärmeisolation ausgelegt ist und eine innere, höher verdichtete Lage die Tragfunktion übernimmt. Die hohen Temperaturen dringen dann nicht mehr bis zur inneren Lage vor.

Wie bereits erwähnt, kann bei mehrlagiger Ausbildung eine Zwischenlage vorgesehen sein. Diese Zwischenlage besteht vorzugsweise aus einer dünnen Metallfolie. Statt dessen oder zusätzlich kann auch hier eine gesonderte Feuerschutzschicht vorgesehen sein.

Der Erweichungspunkt der Mineralwolle-Bauelemente liegt vorzugsweise oberhalb von 900 °C, wobei die Mineralwolle-Bauelemente vorzugsweise jeweils zu 42-50 Gew.-% aus $SiO_0$, zu 12-18 Gew.-% aus $Al_2O_3$, zu 12-20 Gew.-% aus CaO, zu 8-15 Gew.-% aus MgO und zu 4-10 Gew.-% aus Fe-Oxiden bestehen.

Der durchschnittliche Durchmesser der Mineralwollfasern der Mineralwolle-Bauelemente liegt vorzugsweise zwischen 2 und 6 μm.

Bei dem zur Herstellung der Mineralwolle-Bauelemente verwendeten Bindemittel handelt es sich vorzugsweise um ein wärmehärtbares Polymer, vorzugsweise ein Phenol-Harz. Der Bindemittel-Anteil kann 1,5-8 Gew.-% betragen und liegt vorzugsweise zwischen 2 und 5 Gew.-%.

Die Feuerschutzbeschichtung kann grundsätzlich nach der Endmontage der Mineralwolle-Bauelemente aufgebracht werden. Vorzugsweise wird sie jedoch schon vor der Montage aufgebracht und zwar auch im Bereich der jeweiligen Berührungsflächen. Als besonders vorteilhaft haben sich Bauelemente erwiesen, die an ihren gegenseitigen Berührungsflächen mit einer nicht brennbaren oder schwer entflammbaren Schutzschicht versehen, insbesondere durch einen solche Eingenschaften aufweisenden Kleber miteinander verklebt sind.

Die zur Montage einer erfindungsgemäßen Feuerschutz-Ummantelung vorgesehenen Mineralwolle-Bauelemente sind vorzugsweise so ausgebildet, daß sie aneinander stapelbar, vorzugsweise ohne Zwischenraum stapelbar sind, wodurch ihr Transport und ihre Lagerung sehr wesentlich erleichtert werden.

Die einander zugeordneten Flansche benachbarter Bauelemente weisen vorzugsweise eine Breite auf, die mindestens der doppelten Wandstärke der Elemente entspricht.

Bei einer bevorzugten Ausführungsform ist ein Traggerüst vorgesehen, an dem die Bauelemente festlegbar sind. Dieses Traggerüst besteht vorzugsweise aus mehreren, vertikal angeordneten Rahmen, die an Kabelwannen befestigbar sind und diese umgeben. Diese Rahmen können aus Uprofilierten Schienen bestehen, zu deren Verbindung Anschluß-Winkelstücke vorgesehen sind. Bei einer bevorzugten Ausführungsform bestehen diese Rahmen jeweils aus vier Flacheisen und sind untereinander über die Flacheisen der einzelnen Rahmen verbindende Winkelschienen verbunden, wobei die Flacheisen und die Winkelschienen mit Verschraubungslöchern versehen sind, die vorzugsweise als Langlöcher ausgebildet sind. Die einzelnen Rahmen können erforderlichenfalls zusätzlich untereinander durch parallel zu der Kabeltrasse verlaufende Schienen verbunden sein, die ebenfalls mit Verschraubungslöchern versehen sind.

Zur Befestigung der Mineralwoll-Platten am Traggerüst können mit Vorteil durch die Platten hindurchsteckbare oder in diese einsteckbare Halteglieder vorgesehen sein, denen jeweils eine Sicherung zugeordnet sein kann.

Bei einer bevorzugten Ausführungsform sind zur Befestigung der Mineralwoll -Platten stirnseitig in diese eindrückbare und am Traggerüst anschraubbare Befestigungselemente vorgesehen, die jeweils zwei Schenkel aufweisen, von denen der eine eine stirnseitig in eine Mineralwoll-Platte eindrückbare Spitze und der andere ein der Verschraubung am Traggerüst dienendes Langloch aufweist.

Zur gegenseitigen Befestigung der Mineralwoll-Platten können Verbindungselemente vorgesehen sein, die in Ausnehmungen der Platten verankerbar sind. Diese Verbindungselemente können bügelartig aber auch federartig ausgebildet sein. Zur Befestigung der vorzugsweise aus Asbest-Zement bestehenden Verbindungselemente kann ein Kleber verwendet werden, bei dem es sich vorzugsweise um die schon mehrfach erwähnte selbstlöschende Feuerschutzmasse nach der DE-PS 20 39 969 handelt.

Die Schutzschicht, mit der die Mineralwolle-Bauelemente versehen ist, besteht vorzugsweise aus einem mechanischen widerstandsfähigen und/wetterbeständigen Material.

Weitere Einzelheiten, Merkmale und Vorteile der Erfindung ergeben sich aus den Ansprüchen und der nachfolgenden Beschreibung bevorzugter Ausführungsformen im Zusammenhang mit der Zeichnung. In der Zeichnung zeigen jeweils schematisch:

Figur 1 eine perspektivische Darstellung eines Abschnittes einer bevorzugten Ausführungsform der Feuerschutz-Ummantelung gemäß Erfindung,

Figur 2 einen Querschnitt durch die in Fig. 1 dargestellte Feuerschutz-Ummantelung,

Figuren 3 bis 5 andere Ausführungsformen der Feuerschutz-Ummantelung gemäß Erfindung im Querschnitt,

Figuren 6 bis 9 aufeinanderfolgende Stufen zur Montage einer Feuerschutz-Ummantelung gemäß Erfindung,

Figur 10 einen Ausschnitt der in Fig. 4 dargestellten Feuerschutz-Ummantelung von der Seite gesehen,

Figur 11 eine perspektivische Teilansicht einer weiteren Ausführungsform der Feuerschutz-Ummantelung gemäß Erfindung,

Figur 12 eine perspektivische Teilansicht einer mit einem Traggerüst ausgerüsteten Ausführungsform der Feuerschutz-Ummantelung gemäß Erfindung,

Figur 13 eine weitere Ausführungsform der erfindungsgemäßen Feuerschutz-Ummantelung in perspektivischer Darstellung,

Figur 14 eine perspektivische Darstellung eines Abschnittes einer erfindungsgemäßen Feuerschutz-Ummantelung,

Figur 15 das Traggerüst der in Fig. 14 dargestellten Feuerschutz-Ummantelung,

Figur 16 verschiedene, bei der Montage der in Fig. 14 dargestellten Ausführungsform zu verwendende Befestigungselemente,

Figur 17 eine erste Montagestufe des in Fig. 15 dargestellten Traggerüstes,

Figur 18 eine zweite Montagestufe des in Fig. 15 dargestellten Traggerüstes und

Figur 19 die Befestigung einer Mantelplatte am Traggerüst.

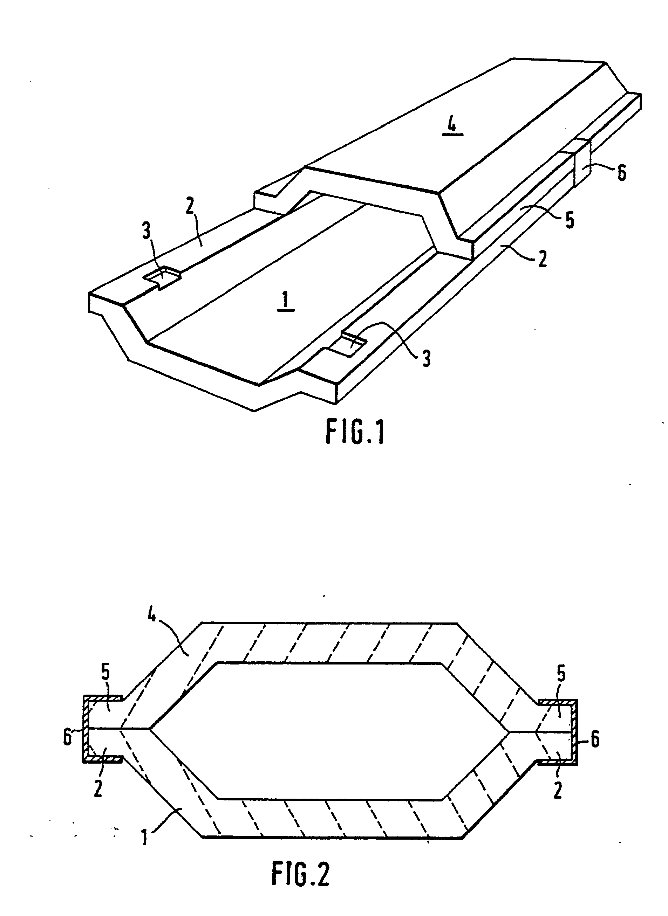

Der in Fig. 1 perspektivisch dargestellte Abschnitt einer bevorzugten Ausführungsform der Feuerschutz-Ummantelung gemäß Erfindung weist ein im wesentlichen U-förmig ausgebildetes Bauelement 1 auf, das aus verpreßtem Mineralwollmaterial gefertigt ist, an der in der Zeichnung nach unten weisenden Seite eine Feuerschutzbeschichtung aufweist und so angeordnet ist, daß seine flanschartig ausgebildeten Ränder 2 in einer horizontalen Ebene liegen. An die flanschartig ausgebildeten Ränder 2 schließen sich um etwa 45° geneigte Seitenwandungen an, die in einen ebenen Boden übergehen. Die Bodenbreite entspricht im wesentlichen der dreifachen Bauelement-Tiefe. Die flanschartig ausgebildeten Ränder 2 weisen in gleichmäßigen Abständen einander gegenüberliegende Einprägungen 3 auf, in die seitliche Enden nicht dargestellter Kabelhalter einlegbar sind. Diese Kabelhalter können jeweils aus einem geraden Steg bestehen, aber auch wellenförmige, der Ablage einzelner Kabel dienende Vertiefungen aufweisen. Damit werden die Kabel von den Bauelementen getragen und sind im gebildeten Kanal allseitig von Luft umgeben. Ein besonderes Traggerüst für die Kabel entfällt.

Die von mehreren, hintereinander angeordneten Bauelementen 1 gebildete Rinne wird abgedeckt durch mehrere, ebenfalls hintereinander angeordnete Bauelemente 4, von denen in Fig. 1 der besseren Übersicht wegen nur eins dargestellt ist.

Die Bauelemente 4 entsprechen in ihrer Form und in ihren Abmessungen den Bauelementen 1, auch sie sind aus verpreßtem Mineralwoll-Material gefertigt und an ihrer Außenseite, d. h. auf der in der Zeichnung nach oben weisenden Seite mit einer Feuerschutzbeschichtung versehen. Die Bauelemente 4 liegen mit ihren Rändern 5 auf den Rändern 2 der Bauelemente 1 auf und sind gegenüber den darunter angeordneten Bauelementen wie die Ziegel einer Mauer versetzt angeordnet. An den Übergangsstellen zwischen den Bauelementen 1 bzw. 4 sind jeweils im wesentlichen U-förmige Metallklammern 6 vorgesehen. Die Metallklammern 6 können auf die Ränder 2, 5 aufgeklemmt werden.

Als vorteilhaft hat sich jedoch erwiesen, für die Metallklammern 6 gesonderte Befestigungselemente, beispielsweise Schrauben vorzusehen.

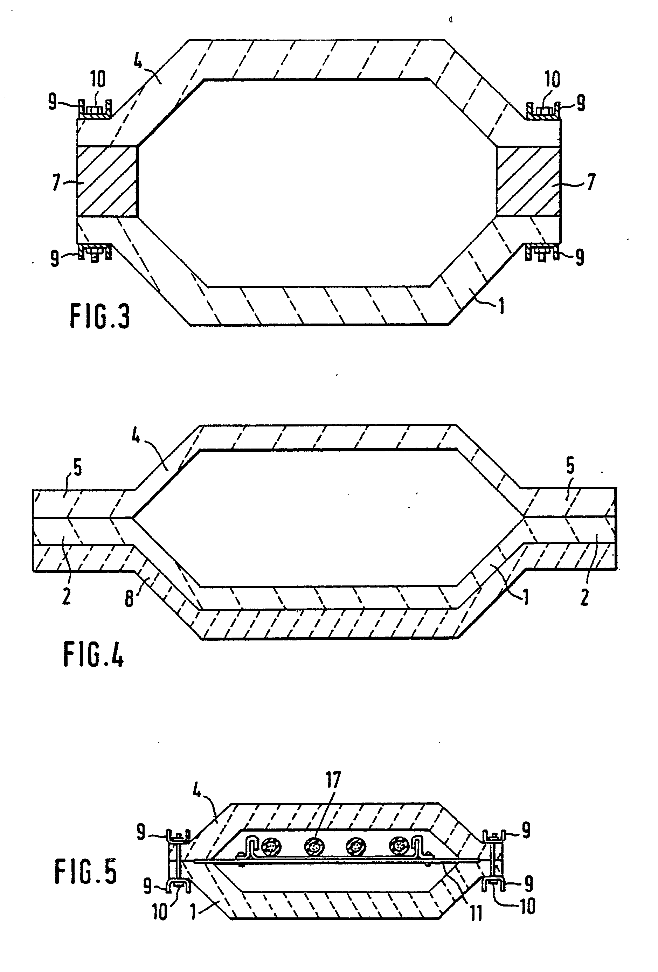

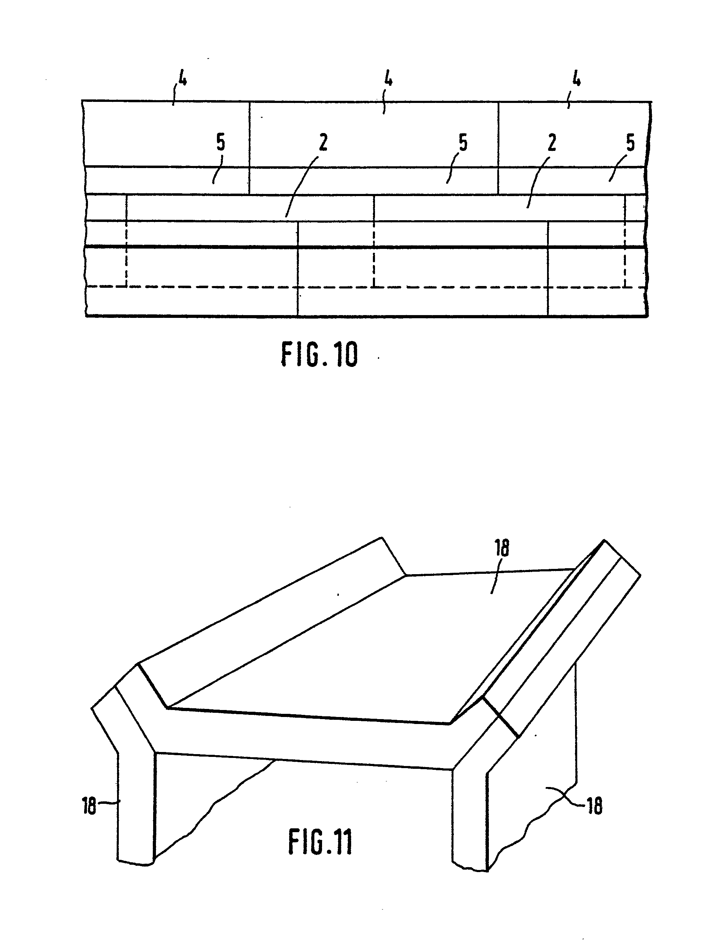

Die Figuren 3 bis 5 zeigen Querschnitte von Feuerschutz-Ummantelungen, die im wesentlichen der in den Figuren 1 und 2 dargestellten Feuerschutz-Ummantelung entsprechen, d. h. auch sie weisen jeweils hintereinander angeordnete untere Bauelemente 1 und darüber angeordnete Bauelemente 4 auf. Bei der in Figur 3 dargestellten Feuerschutz-Ummantelung sind jedoch zwischen den unteren Bauelementen 1 und den oberen Bauelementen 4 leistenförmige, als Abstandhalter 7 dienende Zwischenstücke vorgesehen. Bei der in Figur 4 dargestellten Feuerschutz-Ummantelung sind unter den unteren Bauelementen 1 ebenfalls hintereinander angeordnete Bauelemente 8 vorgesehen, die an den Bauelementen 1 dicht anliegen und versetzt zu diesen (vgl. Fig. 10) angeordnet sind. Die in Figur 4 dargestellte Feuerschutz-Ummantelung ist also im unteren Bereich doppellagig ausgebildet.

Bei den in den Figuren 3 und 5 dargestellten Feuerschutz-Ummantelungen sind zur Befestigung der oberen Bauelemente 4 an den unteren Bauelementen 1 bzw. 1, 8 U-Schienen 9 und Befestigungsschrauben 10 vorgesehen, wobei die U-Schienen 9 mit ihrer Basis an den Rändern der Bauelemente anliegen und vorzugsweise länger als die Bauelemente sind, so daß sie der gleichzeitigen Befestigung mehrerer hintereinander angeordneter Bauelemente dienen. Sie erstrecken sich über die gesamte Länge des Brandschutzkanals.

Die bei der Feuerschutz-Ummantelung nach Figur 3 vorgesehenen Abstandhalter 7 und die bei der Feuerschutz-Ummantelung nach Figur 4 vorgesehenen, unterhalb der Bauelemente 1 angeordneten Bauelemente 8 bestehen vorzugsweise jeweils ebenfalls aus einem verpreßtem Mineralwoll-Material, das wenigstens an der Außenseite mit einer Feuerschutzbeschichtung versehen ist.

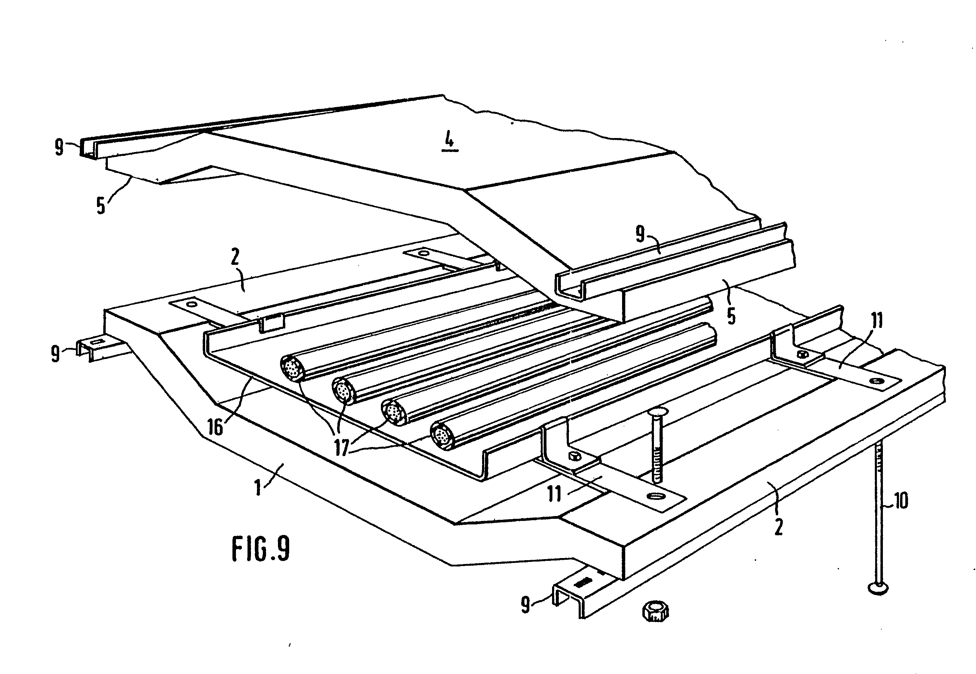

In Figur 9 ist dargestellt, daß die Befestigungsschrauben gewünschtenfalls auch die vorgenannten Kabelhalter 11 durchdringen können. Um die Bildung von Wärmebrücken zu vermeiden, ist es jedoch von Vorteil, die Kabelhalter 11 kürzer auszubilden, so daß sie mit den Befestigungsschrauben 10 nicht in Berührung kommen, wie dies in Figur 5 dargestellt ist.

Bei der in Figur 4 dargestellten Feuerschutz-Ummantelung kann zwischen den Bauelementen 1 und den darunter befindlichen Bauelementen 8 eine gesonderte Feuerschutz-Beschichtung vorgesehen sein. Dadurch ist es möglich, zwischen den beiden Bauelementen-Lagen eine dünne Metallfolie, beispielsweise eine Aluminiumfolie vorzusehen. Eine solche Metallfolie kann auch in die Bauelemente 1, 4, 8 eingebettet werden, wodurch diese einerseits eine zusätzliche Versteifung und andererseits eine zusätzliche Abdichtung gegen Gas- und Flüssigkeitsdurchtritt erhalten.

Die einzelnen Bauelemente 1, 4, 8 können jeweils so profiliert sein, daß sie sich ineinander stapeln lassen wie die in Figur 4 im Schnitt dargestellten Bauelemente, was ihren Transport und ihre Lagerung sehr wesentlich erleichtert.

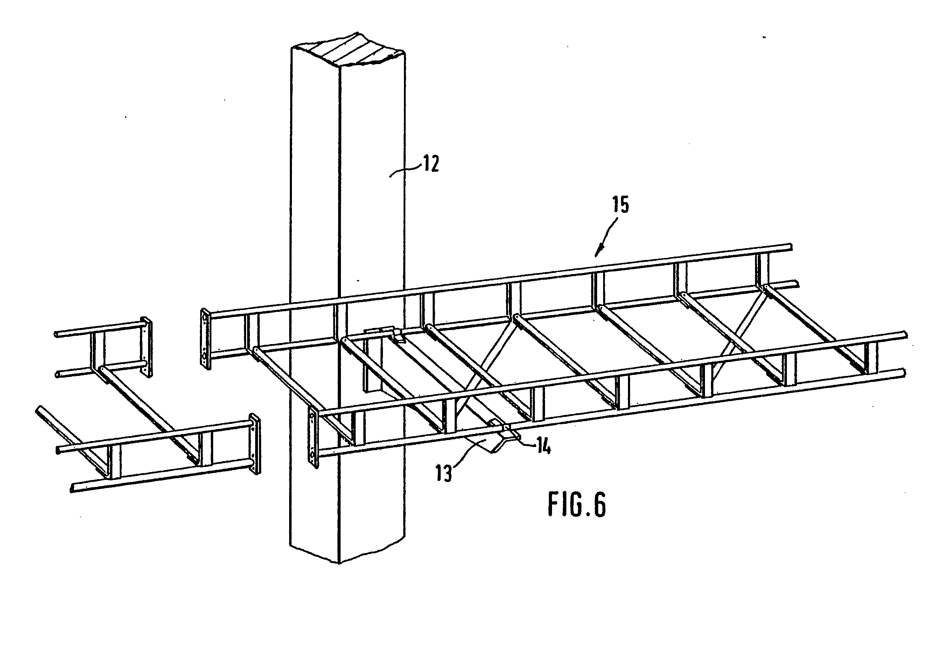

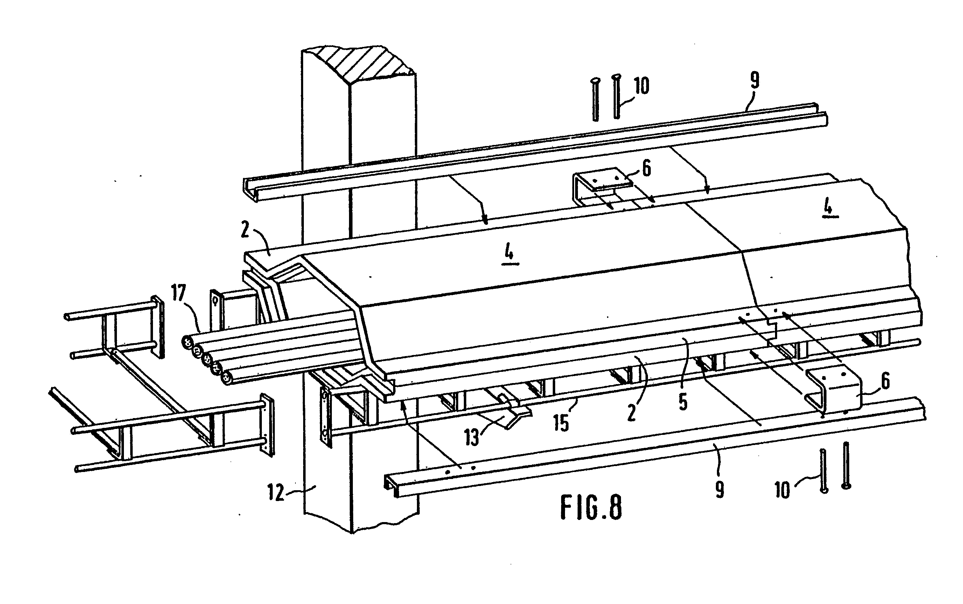

In den Figuren 6 bis 9 ist dargestellt, wie eine Feuerschutz-Ummantelung gemäß Erfindung in der Praxis montiert werden kann.

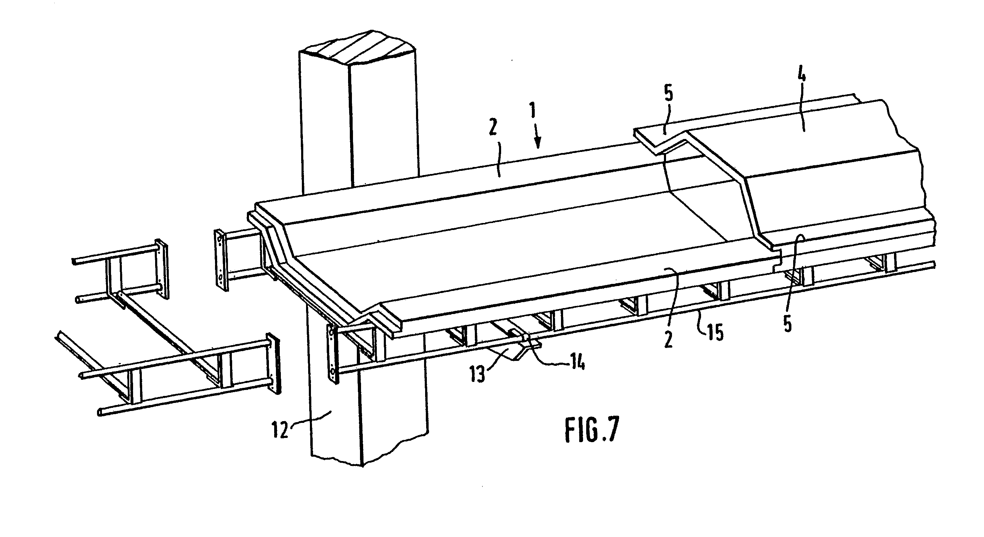

In Figur 6 ist ein Pfeiler 12 dargestellt, an dem eine Konsole 13 befestigt ist. Auf der Konsole 13 liegt ein dort mit Schellen 14 befestigtes, im wesentlichen leiterförmig ausgebildetes Gestell 15, das aus mehreren, jeweils stirnseitig miteinander verschraubbaren Einzelsegmenten besteht. Auf das Gestell 15 wird zunächst von oben eine Lage hintereinander angeordneter, unterer Bauelemente 1 aufgelegt. Die unteren Bauelemente 1 können, wie in Figur 7 dargestellt ist, zur gegenseitigen Abdichtung zusammenwirkende Profilierungen aufweisen. Gleiches gilt auch für die oberen Bauelemente 4, die anschließend auf die Ränder 2 der unteren Bauelemente 1 aufgelegt werden können, wenn eine lose Kabelverlegung, d. h. eine Kabelverlegung ohne Kabelhalter in dem von den unteren Bauelementen 1 und den darüber angeordneten Bauelementen 4 gebildeten Kanal gewünscht ist. Sind die oberen Bauelemente 4 aufgelegt, so können die vorerwähnten Metallklammern 6 aufgeschoben werden. Ist dies geschehen, werden die vorerwähnten U-Schienen 9 mit Befestigungsschrauben 10 befestigt. Die Kabel können vor Auflegen der oberen Bauelemente 4 verlegt oder nachträglich eingezogen werden.

Sollen Kabelhalter 11 eingesetzt werden, so sind diese vor dem Auflegen der oberen Bauelemente in die hierfür in den unteren Bauelementen 1 vorgesehenen Einprägungen einzulegen. Die einzelnen Kabelhalter 11 können zuvor oder auch danach über eine vorzugsweise aus Blech gefertigte Rinne 16 miteinander verbunden werden, in der dann die zu schützenden Kabel 17 zu verlegen sind (vgl. Fig. 9). Anschließend erfolgt die Abdeckung durch die oberen Bauelemente 4. Weiterhin ist aus Figur 9 ersichtlich, daß die unteren U-Schienen 9 durch besondere Schrauben lediglich an den unteren Bauelementen 1 befestigbar sind, so daß die oberen Bauelemente 4 im Bedarfsfalle abgehoben werden können, ohne daß die unteren U-Schienen 9 abmontiert werden müssen.

In Figur 10 ist dargestellt, wie die einzelnen Bauelemente 1, 4 und 8 vorzugsweise gegeneinander versetzt angeordnet werden können.

In Figur 11 ist eine perspektivische Teilansicht einer Feuerschutz-Ummantelung dargestellt, die aus vier Bauelementen 18 zusammengesetzt ist, die, wie die Bauelemente 1, 4, und 8 auch starr ausgebildet und aus einem verpreßten Mineralwoll-Material gefertigt sind. Auch diese Bauelemente 18 weisen wenigstens auf der Außenseite eine Feuerschutzbeschichtung auf. Die Ränder der Bauelemente 18 sind jeweils flanschartig nach außen umgebogen, so daß sie am Randflansch des benachbarten Bauelementes dicht anliegen und über den vorerwähnten Metallklammern 6 entsprechende Klammern und/oder U-Schienen 9 miteinander verbunden werden können.

In einer nicht dargestellten Ausführungsform besteht die erfindungsgemäße Feuerschutz-Ummantelung aus einzelnen Bauelementen, deren sämtliche Ränder nach außen umgebogen sind, so daß auch die Ränder von hintereinander, in Ummantelungs-Längsrichtung benachbarten Bauelementen aneinander anliegen und über Klammern bzw. U-Schienen miteinander verbunden werden können.

Die erfindungsgemäße Ummantelung kann auch zum Schutze anderer Gegenstände, insbesondere Baukonstruktionselemente, beispielsweise Stahlträger, aber auch zum Schutz von Versorgungs- oder Hydraulik-Steuerleitungen eingesetzt werden.

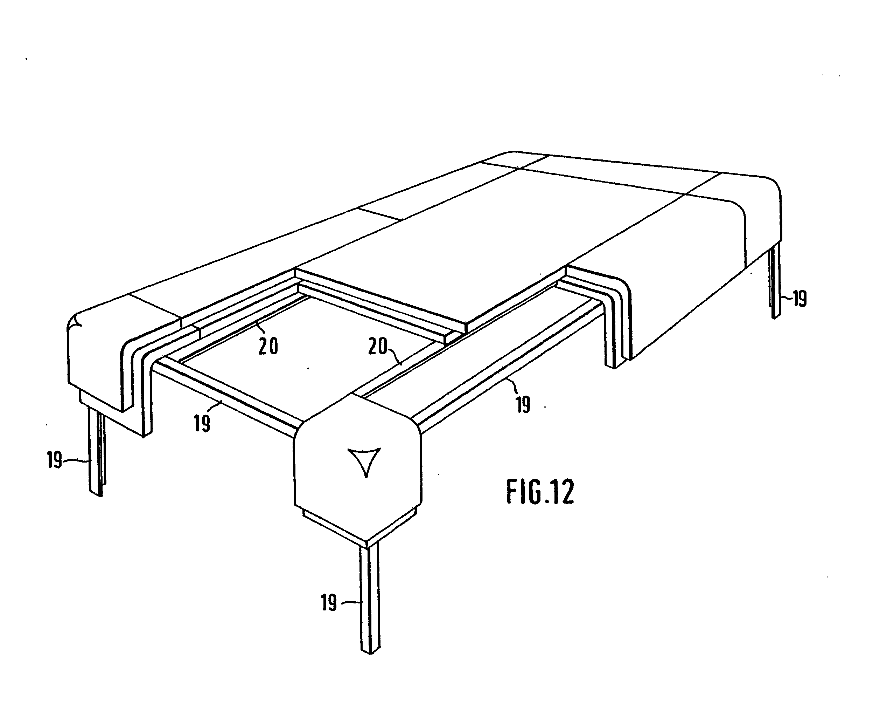

Bei der in Fig. 12 dargestellten Ausführungsform ist ein aus einzelnen Schienen 19, 20 bestehendes Traggerüst vorgesehen, an dem die einzelnen Bauelemente festlegbar sind, die hier aus jeweils zweilagigen Eck-, Kanten- und plattenförmigen Zwischenstücken bestehen.

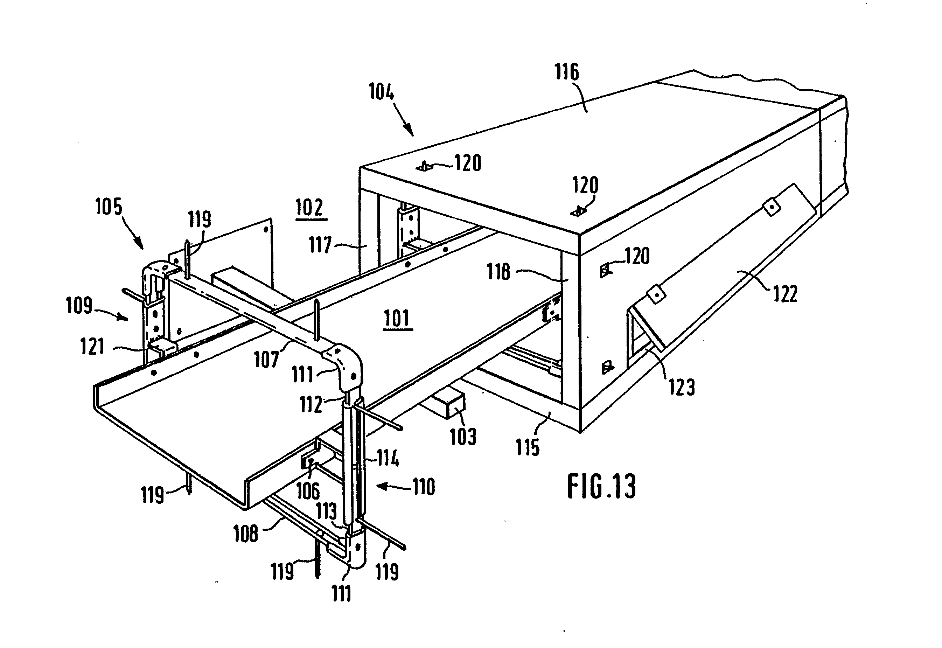

Bei der in Fig. 13 dargestellten Ausführungsform der erfindungsgemäßen Feuerschutz-Ummantelung handelt es sich um eine Schutzvorrichtung für eine Kabeltrasse, bei der für mehrere nebeneinander verlaufende Kabel eine Kabelwanne 101 vorgesehen ist, die auf an einer Wand 102 befestigten Träger 103 befestigt ist. Die Schutzvorrichtung besteht im wesentlichen aus einem Schutzmantel 104, der an vertikal verlaufenden Rahmen 105 befestigt ist, die ihrerseits an der Kabelwanne 101, vorzugsweise mittels Schrauben 106 über Zwischenstücke 121 befestigt sind.

Die Rahmen 105 bestehen jeweils aus zwei horizontal verlaufenden Schienen 107, 108, zwei vertikal verlaufenden Schienen 109, 110 und vier Anschluß-Winkelstückchen 111, die die horizontal verlaufenden Schienen 107, 108 mit den vertikal verlaufenden Schienen 109, 110 verbinden. Die Schienen 107 bis 110 können jeweils aus mehreren, gegeneinander axial verstellbaren Teilen bestehen, so daß sie den jeweiligen Raumverhältnissen angepaßt werden können. In der Zeichnung sind nur die beiden jeweils vertikal verlaufenden Schienen 109, 110 entsprechend mehrteilig ausgebildet. Sie bestehen jeweils aus zwei kurzen Schienenstücken 112, 113 und einem Mittelteil 114, in dem die Schienenstücke 112, 113 axial verschiebbar und mittels nicht dargestellter Verbindungselemente, beispielsweise Schrauben, festlegbar sind.

Der Schutzmantel 104 hat einen rechteckigen Querschnitt. Seine Wände bestehen aus aneinandergefügten ebenen Mineralwoll-Platten von etwa 30-80, vorzugsweise 50 mm Stärke, nämlich einer Bodenplatte 115, einer Deckplatte 116 und zwei Seitenplatten 117, 118.

Die Platten 115 bis 118 sind in der dargestellten Ausführungsform jeweils mehrteilig ausgebildet, d. h. sie bestehen in dieser Ausführungsform aus mehreren rechteckigen Einzelplatten, die mit ihren Schmalseiten aneinander anstoßen. Zur Befestigung der Platten 115 bis 118 sind Befestigungselemente 119 vorgesehen, die im wesentlichen nagelförmig ausgebildet sind.

Zur Montage der Platten 115 bis 118 ist folgendermaßen vorzugehen :

Zunächst ist eine Bodenplatte 115 an zwei Rahmen 105 mittels jeweils zweier Befestigungselemente 119 zu befestigen. Die Befestigungselemente 119 sind hierzu vom Rahmeninneren her durch die Platte zu schlagen. Die austretenden Enden der Befestigungselemente 119 können anschließend durch Klemmscheiben 120 oder Umschlagen gesichert werden. Ist die Befestigung der Bodenplatte 115 an den beiden Rahmen 105 erfolgt, so kann mit der Befestigung der beiden Seitenplatten 117, 118 an den beiden Rahmen 105 begonnen werden, wozu wiederum Befestigungselemente 119 zu verwenden sind. Zuvor sind jedoch die zur Bodenplatte 115 weisenden Stirnseiten der Seitenplatten 117 und 118 mit einem hitzebeständigen Kleber zu bestreichen. Zur Befestigung der Seitenplatten 117 und 118 an der Bodenplatte können auch zusätzliche Verbindungselemente verwendet werden, die bügelartig oder federartig ausgebildet sein können und denen in der Bodenplatte 115 entsprechende Ausnehmungen bzw. Nuten zugeordnet sind. Sind die beiden Seitenplatten 117, 118 montiert, so kann mit der Montage der Deckplatte 116 begonnen werden, die in analoger Weise durchzuführen ist.

Das aus zwei Rahmen 105, einer Bodenplatte 115, zwei Seitenplatten 117, 118 und einer Deckplatte 117 gefertigte Gebilde stellt ein eine Einheit bildendes Bauteil dar, das in der Fabrik vorgefertigt oder gewünschtenfalls auch erst an der Baustelle zusammengesetzt werden kann. Dieses Bauteil kann dann an der Baustelle stirnseitig an andere, entsprechend ausgebildete Bauteile angefügt werden, wozu neben oder statt eines hitzebeständigen Klebers wiederum Verbindungselemente verwendet werden können, die dübelartig, bügelartig oder federartig ausgebildet sind und für die im benachbarten Bauteil entsprechend bemessene Aufnahmen vorgesehen sein können.

Die erfindungsgemäße Feuerschutz-Ummantelung hat den Vorteil, daß sie sowohl nachträglich für schon bestehende Einrichtungen, beispielsweise Kabeltrassen, als auch bei deren Neuverlegung einsetzbar ist und daß sie sich durch eine besonders hohe Isolationswirkung auszeichnet. Zu erwähnen wäre noch ihre leichte Bauweise und daß zu ihrer Montage keine besonderen Träger für ihre Rahmen 105 erforderlich sind.

Der Schutzmantel 104 der Ummantelung, vorzugsweise die beiden Seitenplatten 117, 118 können mit Belüftungsklappen 122 versehen sein, die für eine gute Zirkulation und Be- und Entlüftung des Schutzmantel-Inneren und damit für eine Abkühlung der darin verlegten Kabeltrasse sorgen. Die Belüftungsklappen 122 können direkt an den Schutzmantel-Platten angelenkt sein. Es ist jedoch auch möglich, sie an rahmenförmig ausgebildeten Einsätzen 123 anzulenken, die in ihren Abmessungen entsprechende Platten-Ausnehmungen befestigbar sind.

Die Belüftungsklappen 122 und die ihnen ggf. zugeordneten Einsätze 123 bestehen vorzugsweise aus einem hitzbeständigen Hartmaterial, vorzugsweise aus Mineralwoll-Platten, bei deren Herstellung ein zementartiges Bindemittel verwendet wurde.

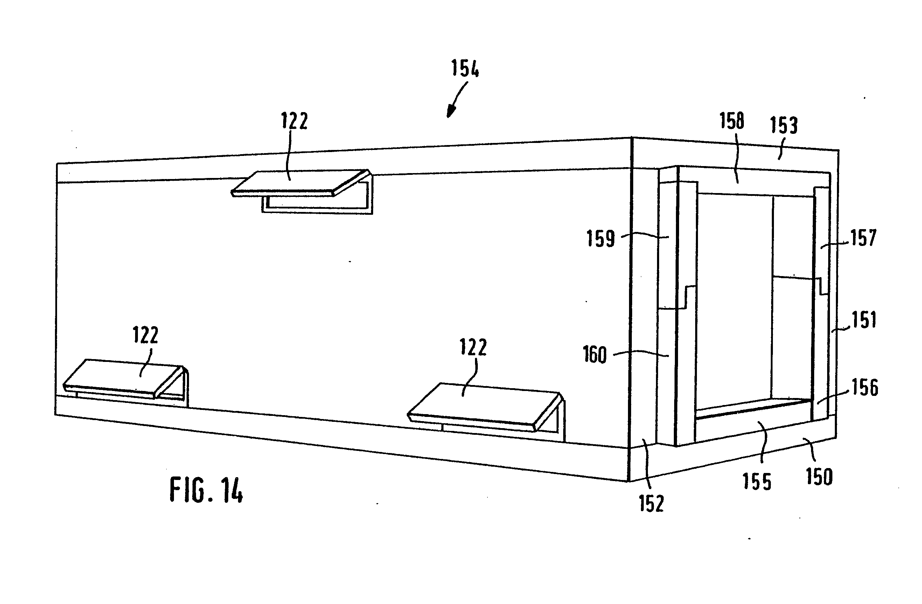

In Fig. 14 ist ein eine Bodenplatte 150, zwei Seitenplatten 151, 152 und eine Deckplatte 153 aufweisender Abschnitt 154 einer Trassenummantelung dargestellt, der mit entsprechend ausgebildeten und bemessenen Abschnitten stirnseitig verbunden werden kann. Um eine stirnseitig dichte Verbindung benachbarter Abschnitte 154 sicherzustellen, weisen die einzelnen Abschnitte an einer ihrer Stirnseite jeweils einen inneren Rahmen auf, der stirnseitig in den benachbarten Abschnitt einschiebbar ist. Dieser Rahmen besteht aus einzelnen Leisten 155-160, die vorzugsweise aus dem gleichen Material wie die Platten 150-153 bestehen und untereinander und mit den Platten 150-153 mittels eines hitzebeständigen Klebers verklebt sind. Die einander zugekehrten Stirnseiten der Leisten 155-160 können Dichtprofile aufweisen, wie im übrigen auch die Platten 150-153 der einzelnen Abschnitte 154.

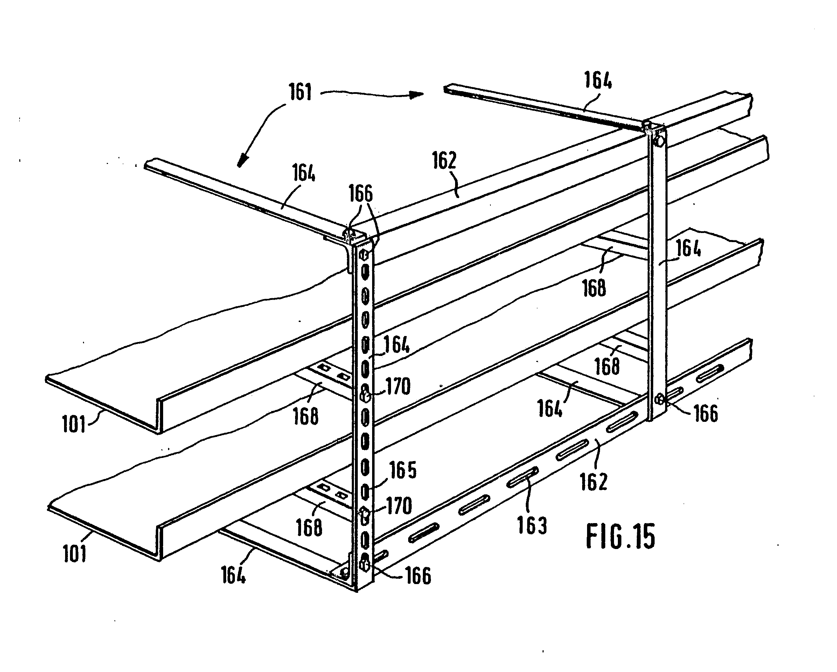

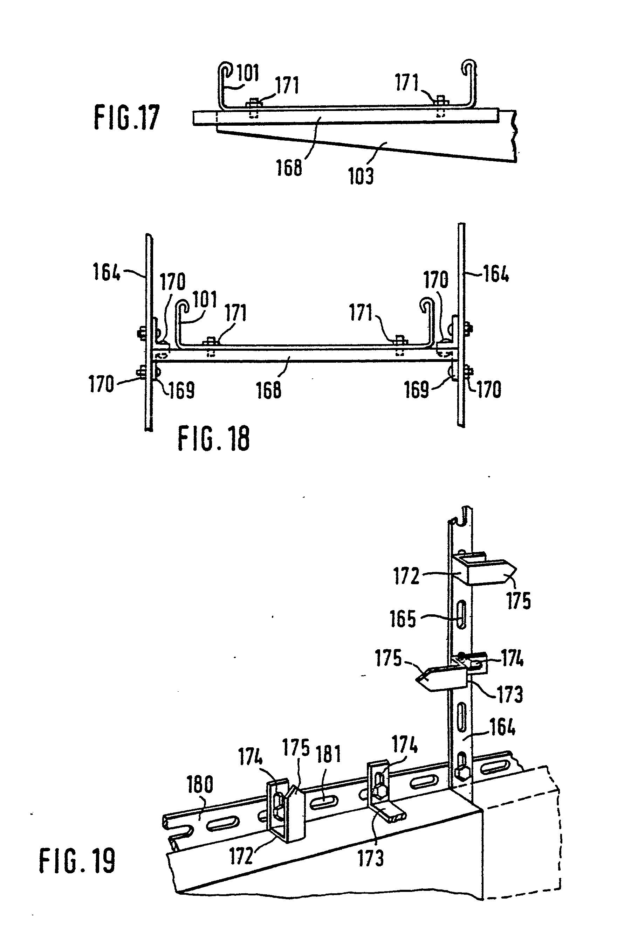

Abweichend von der in Fig. 13 dargestellten Ausführungsform kann das den Platten 150-153 zugeordnete Traggerüst mit Vorteil auch aus einzelnen Rahmen 161 bestehen (vgl. Fig. 15), die untereinander über Winkelschienen 162 verbunden sind, die mit Langlöchern 163 versehen sind. Die Rahmen 161 bestehen bei der in Fig. 15 dargestellten Ausführungsform aus vier Flacheisen 164, die ebenfalls mit Langlöchern 165 versehen und mit Schrauben 166 an die Winkelschienen 162 geschraubt sind. Zwischen den beiden vertikal verlaufenden Flacheisein 164 sind U-profilierte, mit ihren Schenkeln nach unten weisende Tragschienen 168 vorgesehen, zu deren Befestigung an den vertikalen Flacheisen 164 Winkelstücke 169 und Schrauben 170 vorgesehen sind (vgl. Fig. 18). Die Tragschienen 168 sind mit Schrauben 171 an die Kabelwannen-Unterseite geschraubt (vgl. Fig. 17).

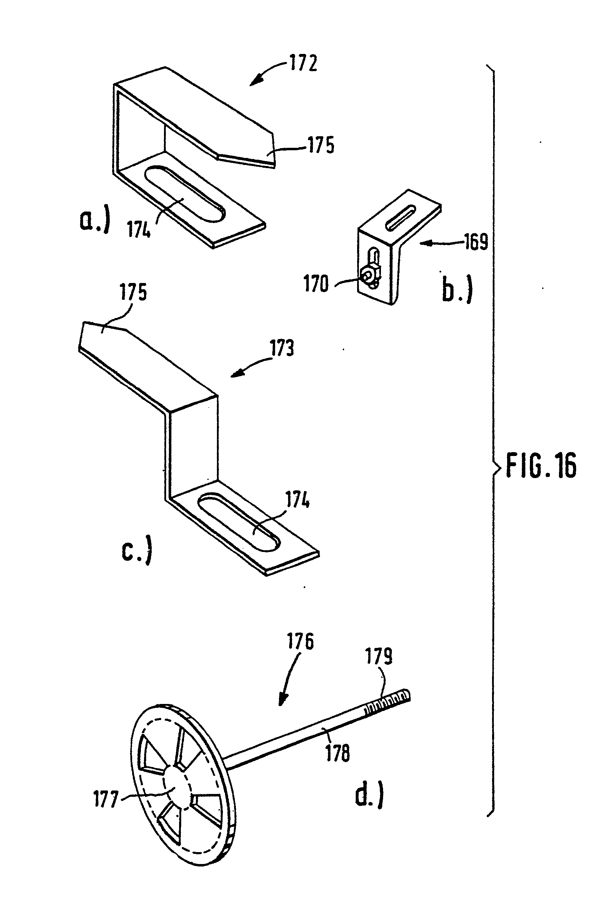

Zur Befestigung der Platten 150-153 am Traggerüst können abweichend von der in Fig. 13 dargestellten Ausführungsform mit dem Traggerüst verschraubbare Befestigungselemente 172, 173 vorgesehen sein, die stirnseitig in die Mantelplatten zu drücken sind. In den Fig. 16a) und 16c) sind solche Befestigungselemente 172, 173 dargestellt. Diese Befestigungselemente sind aus stabilem Blech gefertigt und im wesentlichen U- bzw. Z-förmig ausgebildet. Sie weisen jeweils einen mit einem Langloch 174 versehenen Schenkel auf, mit dem sie am Traggerüst befestigbar sind, sowie einen mit einer Spitze 175 versehenen Schenkel. Mit Hilfe derartiger Befestigungselemente kann bei der Mantelplatten-Montage folgendermaßen vorgegangen werden:

Zunächst werden an den unteren Winkelschienen 163 des Traggerüstes mehrere der U-förmigen Befestigungselemente 172 so angeschraubt, daß ihre mit einer Spitze 175 versehenen Schenkel nach oben weisen. Ist dies geschehen, so kann eine Seitenplatte 151 bzw. 152 von oben auf die Spitzen der Befestigungselemente 172 geschoben werden. Zur Befestigung an dem Rahmen 161 bzw. an den vertikalen Schienen 164 der Rahmen 161 können dann die im wesentlichen Z-förmigen Befestigungselemente 173 verwendet werden, deren Spitzen in die Plattenstirnseiten zu drücken sind, woraufhin dann die Verschraubung der Befestigungselemente 173 mit dem Rahmen 161 erfolgen kann. Zusätzlich zu den im wesentlichen U- bzw. Z-förmigen Befestigungselemente 172, 173 können auch zur Plattenbefestigung Durchsteck-Befestigungselemente verwendet werden, von denen in Fig. 16d) eine Ausführungsform dargestellt ist. Das in Fig. 16d) dargestellte Befestigungselement 176 weist einen großen, im wesentlichen scheibenförmigen Kopf 177 auf, an dem ein Schaft 178 befestigt ist. Am freien Ende des Schaftes 178 ist eine Gewinde 179 vorgesehen, auf das eine Mutter geschraubt werden kann, nachdem der Schaft 178 mit seinem Gewinde 179 voraus durch eine Mantelplatte und ein Langloch des Traggerüstes geführt worden ist.

Bei dem in Fig. 15 dargestellten Traggerüst können die einzelnen Rahmen 161 nicht nur über vier Winkelschienen 162, sondern erforderlichenfalls auch zusätzlich durch parallel zu diesen verlaufende Lochschienen 180 verbunden sein (vgl. Fig. 19), die Langlöcher 181 aufweisen, zur Stabilisierung des Traggerüstes beitragen und vorzugsweise immer dann vorzusehen sind, wenn die einzelnen Mantelplatten aus in Mantellängsrichtung nebeneinander liegenden Platten zusammengesetzt werden müssen.

**Patentansprüche**

1. Feuerschutz-Ummantelung zum Schutz hitzeempfindlicher Kabel (17) in petrochemischen Anlagen mit starren Bauelementen (1, 4, 8, 18) auf Mineralfaserbasis, dadurch gekennzeichnet, daß die Bauelemente aus Mineralwolle gefertigt sind, wenigstens einige der Bauelemente (1, 4, 8, 18) in wenigstens einer Richtung bogenförmig gewölbt oder abgewinkelt ausgebildet sind und die Ummantelung wenigstens an der Außenseite eine Feuerschutzbeschichtung aufweist.

2. Ummantelung nach Anspruch 1, dadurch gekennzeichnet, daß die gewölbt bzw. abgewinkelt ausgebildeten Bauelemente (1, 4, 8, 18) im Querschnitt im wesentlichen L- oder U-förmig profiliert ausgebildet sind.

3. Ummantelung nach einem der Ansprüche 1 oder 2, dadurch gekennzeichnet, daß die Kabel (17) von den Bauelementen (1, 4, 8, 18) getragen werden.

4. Ummantelung nach einem der vorhergehenden Ansprüche, dadurch gekennzeichnet, daß die Bauelemente aus mit einem wärmehärtbaren Polymer gebundenen Mineralwollfasern bestehen.

5. Ummantelung nach einem der vorhergehenden Ansprüche, dadurch gekennzeichnet, daß die Mineralwolle-Bauelemente (1, 4, 8, 18) verpreßte Formteile sind.

6. Ummantelung nach einem der vorhergehenden Ansprüche, dadurch gekennzeichnet, daß die Mineralwolle-Bauelemente (1, 4, 8, 18) im Verbindungsbereich verdichtet sind, vorzugsweise unter Ausbildung eines Profils.

7. Ummantelung nach einem der vorhergehenden Ansprüche, dadurch gekennzeichnet, daß die Mineralwolle-Bauelemente (1, 4, 8, 18) undurchlässig sind, vorzugsweise durch eine eingelagerte Metallfolie, die sich vorzugsweise im wesentlichen über die gesamte Bauelement-Fläche erstreckt.

8. Ummantelung nach einem der vorhergehenden Ansprüche, dadurch gekennzeichnet, daß die Mineralwolle-Bauelemente (1, 4, 8, 18) flanschartig ausgebildete Ränder (2, 5) aufweisen, die nach außen abgebogen sind.

9. Ummantelung nach einem der vorhergehenden Ansprüche, dadurch gekennzeichnet, daß Winkel- und/oder Eckstücke vorgesehen sind, die die der Ummantelungskante bzw. -ecke benachbarten Ummantelungsbereiche bedecken, vorzugsweise in einer Breite, die mindestens der doppelten Ummantelungs-Wandstärke entspricht.

10. Ummantelung nach einem der vorhergehenden Ansprüche, dadurch gekennzeichnet, daß die Mineralwolle-Bauelemente (1, 4, 8, 18) eine Metallnetz-Verstärkung aufweisen, die vorzugsweise in der Wandungsmitte oder in der inneren Wandungshälfte angeordnet ist.

11. Ummantelung nach einem der vorhergehenden Ansprüche, dadurch gekennzeichnet, daß die Bauelemente (1, 4, 8, 18) Ausnehmungen, insbesondere Einprägungen (3), zur Lagerung und Befestigung von entsprechend ausgebildeten Befestigungs- und Stützelementen (11) aufweisen.

12. Ummantelung nach einem der vorhergehenden Ansprüche, dadurch gekennzeichnet, daß die Bauelemente (1, 4, 8, 18) unter Anpreßdruck miteinander verbunden sind.

13. Ummantelung nach einem der vorhergehenden Ansprüche, dadurch gekennzeichnet, daß Platten, Klammern oder Schienen (9) vorgesehen sind, die sich vorzugsweise über den gesamten Verbindungsbereich erstrecken und den Anpreßdruck gleichmäßig verteilen.

14. Ummantelung nach einem der vorhergehenden Ansprüche, dadurch gekennzeichnet, daß die Innenseite und/oder die Außenseite abgedichtet ist, insbesondere durch eine abdeckende Oberflächenbehandlung bzw. Imprägnierung.

15. Ummantelung nach einem der vorhergehenden Ansprüche, dadurch gekennzeichnet, daß sie wenigstens bereichsweise mehrlagig ausgebildet ist, vorzugsweise im unteren Teil.

16. Ummantelung nach einem der vorhergehenden Ansprüche, dadurch gekennzeichnet, daß die Mineralwolle der Bauelemente ein Raumgewicht von 100-500, vorzugsweise 150-250 kg/m$^3$ hat.

17. Ummantelung nach einem der Ansprüche 15 oder 16, dadurch gekennzeichnet, daß eine innere Lage eine höhere Dichte als eine äußere Lage hat.

18. Ummantelung nach einem der Ansprüche 15 bis 17, dadurch gekennzeichnet, daß zwischen einer inneren und einer äußeren Lage eine dünne Zwischenlage vorgesehen ist, die vorzugsweise eine dünne Metallfolie oder eine Feuerschutzschicht ist.

19. Ummantelung nach einem der vorhergehenden Ansprüche, dadurch gekennzeichnet, daß die Bauelemente (1, 4, 8, 18) an ihren gegenseitigen Berührungsflächen mit einer nicht brennbaren oder schwer entflammbaren Schutzschicht versehen, insbesondere durch einen solche Eigenschaften aufweisenden Kleber miteinander verklebt sind.

20. Ummantelung nach einem der vorhergehenden Ansprüche, dadurch gekennzeichnet, daß die Bauelemente (1, 4, 8, 18) ineinander stapelbar, vorzugsweise ohne Zwischenraum stapelbar, ausgebildet sind.

21. Ummantelung nach einem der vorhergehenden Ansprüche, dadurch gekennzeichnet, daß ein Traggerüst vorgesehen ist, an dem die Bauelemente (1, 4, 8, 18) festlegbar sind.

## Claims

1. Fireproof covering for the protection of heat-sensitive cables (17) in petrochemical installations with rigid components (1, 4, 8, 18), with a mineral fibre basis, characterized in that the components are made from mineral wool, at least some of the components (1, 4, 8, 18) are bent or curved in arcuate manner in at least one direction and the covering is provided with a fireproof coating on at least the outside.

2. Covering according to claim 1, characterized in that the curved or bent components (1, 4, 8, 18) are in cross-section, are profiled in a substantially L-shaped or U-shaped manner.

3. Covering according to one of the claims 1 or 2, characterized in that the cables (17) are carried by the components (1, 4, 8, 18).

4. Covering according to one of the preceding claims, characterized in that the components comprise mineral wool fibres bound with a thermosetting polymer.

5. Covering according to one of the preceding claims, characterized in that the mineral wool components (1, 4, 8, 18) are pressed moulded parts.

6. Covering according to one of the preceding claims, characterized in that in the connecting area the mineral wool components (1, 4, 8, 18) are compressed, preferably accompanied by the formation of a profile.

7. Covering according to one of the preceding claims characterized in that the mineral wool components (1, 4, 8, 18) are impermeable, preferably as a result of an incorporated metal foil, which preferably extends substantially over the entire component surface.

8. Covering according to one of the preceding claims, characterized in that the mineral wool components (1, 4, 8, 18) have flange-like edges (2, 5), which are bent to the outside.

9. Covering according to one of the preceding claims, characterized in that angle and/or corner pieces are provided, covering the covering areas adjacent to the covering edge or corner, preferably with a width corresponding to at least double the covering wall thickness.

10. Covering according to one of the precedings claims, characterized in that the mineral wool components (1, 4, 8, 18) have a metal netting reinforcement, which is preferably arranged in the centre or in the inner half of the wall.

11. Covering according to one of the preceding claims, characterized in that the components (1, 4, 8, 18) have recesses, particularly stamped pieces (3), for mounting and fixing correspondingly constructed fixing and supporting elements (11).

12. Covering according to one of the preceding claims, characterized in that the components (1, 4, 8, 18) are interconnected under contact pressure.

13. Covering according to one of the preceding claims, characterized in that plates, clips or rails (9) are provided, which preferably extend over the entire connecting area and uniformly distribute the contact pressure.

14. Covering according to one of the preceding claims, characterized in that inside and/or outside is sealed, particularly by a covering surface treatment or impregnation.

15. Covering according to one of the preceding claims, characterized in that it is at least zonally constructed, in multilayer form, preferably in the lower part.

16. Covering according to one of the preceding claims, characterized in that the mineral wool of the components has a bulk density of 100 to 500, preferably 150 to 250 kg/m³.

17. Covering according to one of the claims 15 or 16, characterized in that an inner layer has a higher density than an outer layer.

18. Covering according to one of the claims 15 to 17, characterized in that a thin intermediate layer, preferably in the form of a thin metal foil or a fireproof coating, is provided between an inner and an outer layer.

19. Covering according to one of the preceding claims, characterized in that the components (1, 4, 8, 18) are provided on their reciprocal contact faces with an inflammable or difficultly flammable protective coating and in particular are stuck together by an adhesive having such characteristics.

20. Covering according to one of the preceding claims, characterized in that the components (1, 4, 8, 18) can be stacked inside one another, preferably without any gap.

21. Covering according to one of the preceding claims, characterized in that a supporting structure is provided, to which components (1, 4, 8, 18) are fixed.

## Revendications

1. Enveloppe de protection contre le feu, destinée à protéger des câbles (17) sensibles à la chaleur dans des installations pétrochimiques et comprenant des éléments constitutifs rigides (1, 4, 8, 18) à base de fibres minérales, caractérisée par le fait que les éléments constitutifs sont fabriqués en laine minérale, au moins quelques-uns des éléments constitutifs (1, 4, 8, 18) étant réalisés avec bombement curviligne ou coudage dans au moins une direction, et ladite enveloppe comportant, au moins sur sa face externe, un revêtement de protection contre les incendies.

2. Enveloppe selon la revendication 1, caractérisée par le fait que les éléments constitutifs (1, 4, 8, 18) de réalisation sensiblement bombée ou coudée possèdent une section profilée sensiblement en L ou en U.

3. Enveloppe selon l'une des revendications 1 ou 2, caractérisée par le fait que les câbles (17) sont supportés par les éléments constitutifs (1, 4, 8, 18).

4. Enveloppe selon l'une des revendications précédentes, caractérisée par le fait que les éléments constitutifs consistent en des fibres de laine minérale liées par un polymère thermodurcissable.

5. Enveloppe selon l'une des revendications précédentes, caractérisée par le fait que les éléments constitutifs (1, 4, 8, 18) en laine minérale consistent en des pièces moulées comprimées.

6. Enveloppe selon l'une des revendications précédentes, caractérisée par le fait que les éléments constitutifs (1, 4, 8, 18) en laine minérale sont compactés dans la zone de jonction, de préférence en constituant un profil.

7. Enveloppe selon l'une des revendications précédentes, caractérisée par le fait que les éléments constitutifs (1, 4, 8, 18) en laine minérale sont imperméables, de préférence grâce à une feuille métallique incorporée s'étendant de préférence, pour l'essentiel, sur toute la surface des éléments constitutifs.

8. Enveloppe selon l'une des revendications précédentes, caractérisée par le fait que les éléments constitutifs (1, 4, 8, 18) en laine minérale présentent des bords (2, 5) conformés en des brides et cintrés vers l'extérieur.

9. Enveloppe selon l'une des revendications précédentes, caractérisée par le fait que sont prévues des pièces d'angle et/ou de coin, qui recouvrent les zones de l'enveloppe respectivement voisines de l'arête ou du coin de cette enveloppe, de préférence sur une largeur correspondant au moins au double de l'épaisseur de la paroi de ladite enveloppe.

10. Enveloppe selon l'une des revendications précédentes, caractérisée par le fait que les éléments constitutifs (1, 4, 8, 18) en laine minérale comportent un renforcement formé d'un réseau métallique disposé, de préférence, au centre de la paroi ou dans la moitié interne de cette paroi.

11. Enveloppe selon l'une des revendications précédentes, caractérisée par le fait que les éléments constitutifs (1, 4, 8, 18) présentent des évidements, en particulier des renfoncements (3) destinés au montage et à la fixation d'éléments (11) de fixation et de soutien, de réalisation correspondante.

12. Enveloppe selon l'une des revendications précédentes, caractérisée par le fait que les éléments constitutifs (1, 4, 8, 18) sont reliés les uns aux autres par pression de compression.

13. Enveloppe selon l'une des revendications précédentes, caractérisée par le fait que sont prévus des plaques, des agrafes ou des rails (9), qui s'étendent de préférence sur toute la zone de jonction et répartissent uniformément la pression de compression.

14. Enveloppe selon l'une des revendications précédentes, caractérisée par le fait que la face interne et/ou la face externe est rendue étanche, en particulier par un traitement superficiel ou, respectivement, par une imprégnation assurant le recouvrement.

15. Enveloppe selon l'une des revendications précédentes, caractérisée par le fait qu'elle est réalisée au moins par zones en plusieurs couches, de préférence dans la partie inférieure.

16. Enveloppe selon l'une des revendications précédentes, caractérisée par le fait que la laine minérale des éléments constitutifs possède un poids spécifique de 100-150, de préférence de 150-250 kg/m³.

17. Enveloppe selon l'une des revendications 15 ou 16, caractérisée par le fait qu'une couche interne présente une densité supérieure à celle d'une couche externe.

18. Enveloppe selon l'une des revendications 15 à 17, caractérisée par le fait qu'il est prévu, entre une couche interne et une couche externe, une mince couche intercalaire consistant, de préférence, en une mince feuille métallique ou en une couche de protection contre les incendies.

19. Enveloppe selon l'une des revendications précédentes, caractérisée par le fait que les éléments constitutifs (1, 4, 8, 18) sont pourvus, sur leurs faces de contact mutuel, d'une couche protectrice non inflammable ou difficilement inflammable, et sont en particulier collés les uns aux autres par un adhésif présentant de telles propriétés.

20. Enveloppe selon l'une des revendications précédentes, caractérisée par le fait que les éléments constitutifs (1, 4, 8, 18) sont réalisés avec faculté d'empilement les uns dans les autres, de préférence avec faculté d'empilement sans espaces intercalaires.

21. Enveloppe selon l'une des revendications précédentes, caractérisée par le fait qu'il est prévu un châssis de support, auquel les éléments constitutifs (1, 4, 8, 18) peuvent être assujettis.

FIG.1

FIG.2

**FIG.3**

**FIG.4**

**FIG.5**

FIG.6

FIG.7

FIG.8

FIG.9

FIG. 10

FIG. 11

7

FIG.12

FIG.13

0 063 733

FIG. 14

FIG.15

FIG.16

FIG.17

FIG. 18

FIG. 19